**Europäisches Patentamt**

**European Patent Office**

**Office européen des brevets**

(11) Veröffentlichungsnummer: **0 054 835**
A1

## (12) EUROPÄISCHE PATENTANMELDUNG

(21) Anmeldenummer: **81110262.3**

(22) Anmeldetag: **08.12.81**

(51) Int. Cl.³: **G 01 B 5/00,** G 01 B 5/06

(30) Priorität: **19.12.80 DE 3048046**

(43) Veröffentlichungstag der Anmeldung: **30.06.82**
**Patentblatt 82/26**

(84) Benannte Vertragsstaaten: **AT CH FR GB IT LI SE**

(71) Anmelder: **MORA Fabrik für Messgeräte H. Freund, Mühlstrasse 5-7, D-8750 Aschaffenburg (DE)**

(72) Erfinder: **Glaab, Heinrich, Lorenz-Heim-Strasse 15, D-8752 Goldbach (DE)**

(74) Vertreter: **Dorner, Jörg, Dr.-Ing. et al, Patentanwälte Dr. Ing. J. Dorner Dipl.-Ing. Dipl.-Wirtsch. W. Hufnagel Landwehrstrasse 37, D-8000 München 2 (DE)**

(54) **Höhenmess- und Anreissgerät.**

(57) Bei einem Höhenmeß- und Anreißgerät mit einem auf einer Richtplatte aufliegenden Führungsbalken (3), längs welchem ein eine Gerätesäule (8) tragender Schlitten (6) verschiebbar ist, sowie mit einem an der Gerätesäule vertikal geführten Schieber (9), der einen mit einem Meß- oder Anreißwerkzeug versehenen Querarm (10) trägt, wird eine geradlinige Verschiebbarkeit nach Art einer Leitlinealführung in beliebiger Richtung auf der Richtplatte ohne zeitraubende Vorbereitungen dadurch erreicht, daß der Führungsbalken (3) auf seiner der Richtplatte (1) zugekehrten Fläche eine Druckluftlageranordnung mit wahlweise ein- und ausschaltbarer (17) Druckluftzufuhr aufweist.

## Höhenmeß- und Anreißgerät

Die Erfindung bezieht sich auf ein Höhenmeß- und Anreißgerät mit einem auf einer Richtplatte aufliegenden Führungsbalken, längs welchem ein eine Gerätesäule tragender Schlitten verschiebbar ist, sowie mit einem an der Gerätesäule vertikal geführten Schuber, der einen mit einem Meß- oder Anreißwerkzeug versehenen Querarm trägt.

Geräte dieser Art sind aus der deutschen Offenlegungsschrift 23 20 944 bekannt. Zur Vorbereitung von Meß- oder Anreißarbeiten wird der Führungsbalken des bekannten Gerätes über Kopplungsmittel an Befestigungspunkte der Richtplattenseite angeschlossen, wonach die Orientierung des Verschiebungsweges des die Gerätesäule tragenden Schlittens relativ zur Richtplatte und zum Werkstück festliegt.

Weiter ist es aus der deutschen Patentschrift 1 161 437 bekannt, einen die Gerätesäule tragenden Schlitten entweder mit Führungsnuten der Richtplatte oder mit einer Führungsnut eines Hilfstisches zu koppeln, um einen definierten Verschiebungsweg des die Gerätesäule tragenden Schlittens relativ zur Richtplatte oder relativ zu dem Werkstück zu erreichen.

Für bestimmte Meß- und Anreißarbeiten ist es jedoch wünschenswert, sowohl die Richtung als auch die Lage des Schlittenverschiebungsweges relativ zu einer parallelen Bezugslage oder relativ zu einer Werkstückfläche beliebig verändern zu können, ohne daß etwa zur Einstellung des Weges des Meß- oder Anreißwerkzeugs die Querarmeinstellung verändert werden muß. Bei dem bekannten Gerät der zuerst genannten Art ist dies wegen der Kopplung des Führungsbalkens mit der Richtplatte und der nicht gegebenen freien Verschiebbarkeit des Führungsbalkens nicht möglich. Bei dem bekannten Gerät der zweitgenannten Art ist der Verschiebungsweg des die Gerätesäule tragenden Schlittens auch bei Verwendung eines Hilfstisches zumindest mittelbar von der Nutung der Richtplatte abhängig.

Durch die Erfindung soll die Aufgabe gelöst werden, ein Höhenmeß- und Anreißgerät der eingangs beschriebenen Art so auszugestalten, daß das Gerät beliebig über die Richtplatte hinweggeführt werden kann, gleichzeitig aber eine geradlinige Verschiebung nach Art einer Leitlinealführung auf einem beliebigen, geradlinig verlaufenden Wege auf der Richtplatte ohne zeitraubende Vorbereitungen verwirklicht werden kann.

Diese Aufgabe wird erfindungsgemäß dadurch gelöst, daß der Führungsbalken auf seiner der Richtplatte zugekehrten Fläche eine Druckluftlageranordnung mit wahlweise ein- und ausschaltbarer Druckluftzufuhr aufweist.

Aus den deutschen Gebrauchsmusterschriften 76 06 232 und 78 16 336 sind zwar bereits Höhenmeß- und Anreißgeräte bekannt, deren Gerätefuß mit einer Druckluftlageranordnung ausgerüstet ist, welche ein freies Verschieben des Gerätes über die Richtplatte hinweg gestattet, doch erschien es bisher offenbar nicht möglich oder zweckmäßig, einen langgestreckten, vergleichsweise schmalen Führungsbalken mit einer Druckluftlageranordnung auszurüsten und auf diese Weise die Funktionen eines frei verschiebbaren Gerätefußes und eines Leitlineals bekannter Geräte in einem einzigen Bauteil zu vereinigen..

Zweckmäßige Ausgestaltungen und Weiterbildungen sind Gegenstand der anliegenden Ansprüche, welche hierdurch ausdrücklich zum Bestandteil der Beschreibung gemacht werden, ohne an dieser Stelle den Wortlaut zu wiederholen. Nachfolgend wird ein Ausführungsbeispiel unter Bezugnahme auf die Zeichnung näher erläutert. Es stellen dar:

Fig. 1   eine perspektivische Teilansicht eines Höhenmeß- und Anreißgerätes auf einer Richtplatte,

Fig. 2   eine Schnitt-Teilansicht des Gerätes gemäß Figur 1 und

Fig. 3   eine Untersicht des Führungsbalkens des Gerätes nach Figur 1.

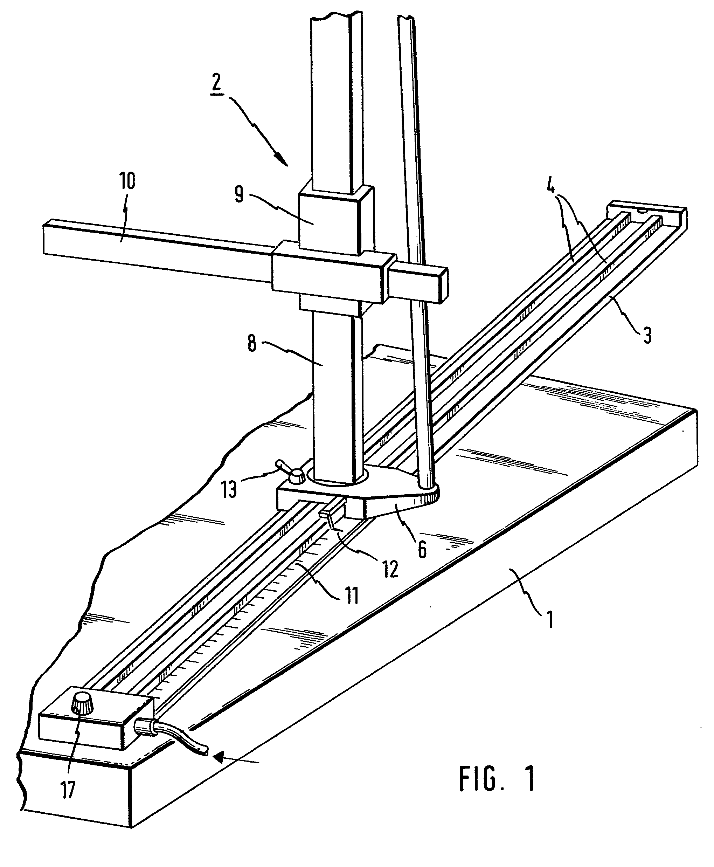

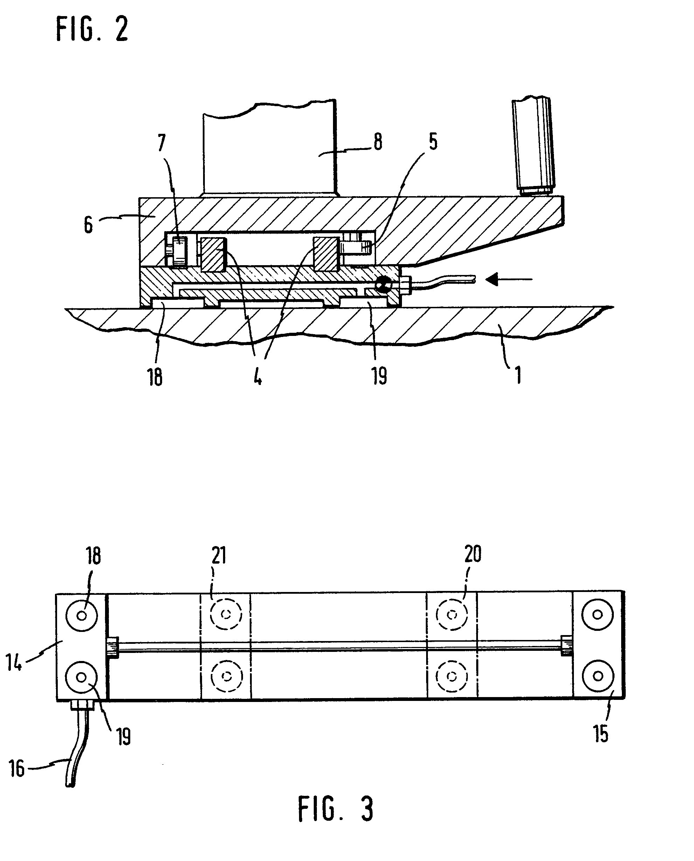

Auf der Richtplatte 1, deren Oberfläche eben und glatt ist, jedoch auch genutet sein kann, befindet sich ein Höhenmeß- und Anreißgerät 2, das einen auf der Richtplattenoberfläche aufliegenden Führungsbalken 3 aufweist. Die Oberseite des Führungsbalkens 3 ist mit längslaufenden Führungsnuten oder, wie bei dem Ausführungsbeispiel nach den Figuren 1 und 2 vorgesehen, mit längslaufenden Führungsstegen 4 versehen, die Anlageflächen für Führungsrollen 5 eines Schlittens 6 bieten. Weitere Führungsrollen 7 dienen zur Abstützung des Schlittens 6 gegenüber dem Führungsbalken 3 mit Bezug auf die Vertikalrichtung.

An dem Schlitten 6 ist der Fuß einer Gerätesäule 8 verankert, längs welcher in Vertikalrichtung ein Schuber 9 geführt ist, der einen mit einem Meß- oder Anreißwerkzeug versehenen Querarm 10 trägt, wie dies für Geräte der vorliegend betrachteten Art charakteristisch ist.

Die Oberseite des Führungsbalkens 3 ist mit in geeignete Ausnehmungen eingelegten, auswechselbaren oder verschiebbaren Meßlinealen 11 versehen, deren Skalen eine Marke oder ein Zeiger 12 des Schlittens 6 gegenübersteht. Außerdem ist an den Schlitten 6 eine Feststelleinrichtung 13 angeordnet, welche, wie in den Zeichnungen nicht im einzelnen gezeigt ist, beispielsweise über einen Klemmechanismus, eine Festlegung des Schlittens 6 gegenüber dem Führungsbalken 3 gestattet.

Auf der Unterseite des Führungsbalkens 3 nahe dessen Enden sind Druckluftlager 14 und 15 angeordnet, welche über eine Druckluftleitung 16 mit Preßluft beaufschlagbar sind. Ein Steuerventil gestattet über ein Betätigungsmittel 17 ein wahlweises Einschalten und Ausschalten der Druckluftzufuhr zu den Druckluftlagern 14 und 15.

Ist die Druckluftzufuhr eingeschaltet, so bewirkt der Druck in den Lagertaschen 18 und 19, daß der gesamte Führungsbalken 3 aufgrund der Abstützung an seinen beiden Enden schwebend über die Richtplatte hinweggeführt werden kann. Etwaige Unstetigkeiten der Richtplattenoberfläche im mittleren Bereich beeinflussen die Verschiebbarkeit des gesamten Gerätes nicht.

In Figur 3 sind in strichpunktierten Linien weitere Druckluftlager eingezeichnet, welche gemäß einer abgewandelten Ausführungsform auf der Unterseite des Führungsbalkens 3 zwischen den Druckluftlagern 14 und 15 vorgesehen sein können. Die einzelnen Druckluftlager sind an die Hauptzuführungsleitung für die Druckluft zweckmäßig über vorgespannte Ventile angeschlossen, so daß die gesamte Druckluftlageranordnung auch dann funktionsfähig bleibt, wenn der Führungsbalken 3 etwa mit einem Ende über die Richtplatte hinausgeführt wird und somit eines der außenliegenden Druckluftlager seine Wirksamkeit verliert, während die innenliegenden Druckluftlager, welche in Figur 3 mit 20 und 21 bezeichnet sind, wirksam bleiben.

Die Druckluftlageranordnung kann in Abwandlung gegenüber der gezeigten Konstruktion auch durch Reihen von Mündungsöffnungen von Druckluftkanälen gebildet sein. In diesem Falle ist die Ausbildung von Taschen auf der Unterseite des Führungsbalkens 3 nicht erforderlich.

Abschließend sei noch auf einige Vorteile des hier vorgeschlagenen Gerätes hingewiesen. Der über die Druckluftlageranordnung abgestützte Führungsbalken ermöglicht eine optimale Ausnützung der Richtplatte 1, welche gegenüber den Verhältnissen bei Verwendung herkömmlicher Geräte bei gleicher Meßgenauigkeit eine geringere Oberflächengüte aufweisen kann. Außerdem ist es möglich, mittels des Führungsbalkens das Gerät über Unterbrechungen der Plattenoberfläche, etwa Bohrungen und Nuten, hinwegzuführen. In bestimmten Fällen kann es hierzu zweckmäßig sein, die Druckluftlageranordnung in Gestalt zweier paralleler, sich über die Länge des Führungsbalkens auf dessen Unterseite erstreckender Reihen von Druckluftkanalmündungen vorzusehen.

Die Verwendung des vorliegend angegebenen Gerätes vermeidet auch nach langer Gebrauchsdauer Laufrillen auf der Oberfläche der Richtplatte.

## Patentansprüche

1. Höhenmeß- und Anreißgerät mit einem auf einer Richtplatte aufliegenden Führungsbalken, längs welchem ein eine Gerätesäule tragender Schlitten verschiebbar ist, sowie mit einem an der Gerätesäule vertikal geführten Schieber, der einen mit einem Meß- oder Anreißwerkzeug versehenen Querarm trägt, dadurch gekennzeichnet, daß der Führungsbalken (3) auf seiner der Richtplatte (1) zugekehrten Fläche eine Druckluftlageranordnung (14, 15, 20, 21) mit wahlweise ein- und ausschaltbarer (17) Druckluftzufuhr aufweist.

2. Gerät nach Anspruch 1, dadurch gekennzeichnet, daß Feststellmittel (13) zum Festlegen des Schlittens (6) gegenüber dem Führungsbalken (3) vorgesehen sind.

3. Gerät nach Anspruch 1 oder 2, gekennzeichnet durch an dem Führungsbalken (3) angeordnete, insbesondere verschiebbare oder auswechselbare Meßlineale (11), welchen Marken bzw. Zeiger (12) des Schlittens (6) gegenüberstehen.

4. Gerät nach einem der Ansprüche 1 bis 3, dadurch gekennzeichnet, daß die Druckluftlageranordnung jeweils an den Enden des Führungsbalkens (3) gelegene Druckluftlager (14, 15) aufweist.

5. Gerät nach Anspruch 4, dadurch gekennzeichnet, daß die Druckluftlageranordnung zwischen den Enden des Führungsbalkens (3) in dessen mittleren Abschnitt gelegene Druckluftlager (20, 21) aufweist.

6. Gerät nach einem der Ansprüche 1 bis 3, dadurch gekennzeichnet, daß die Druckluftlageranordnung von sich über den Führungsbalken hin erstreckenden parallelen Leisten oder Reihen von Druckluftkanalmündungen gebildet ist.

FIG. 1

0054835

1/2

FIG. 2

FIG. 3

Europäisches Patentamt

**EUROPÄISCHER RECHERCHENBERICHT**

0054835

Nummer der Anmeldung

EP 81 11 0262

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| X/Y | <u>FR - A - 2 207 845</u> (AURIOL & CIE) | |
| | * Figuren 1,2,4 und 7; Seiten 3 und 4 * | 1-6 |
| | -- | |
| Y | <u>DE - A - 2 655 049</u> (BAYERISCHE MOTOREN) | |
| | * Figur 1; Seite 6 * | 2,3 |
| | -- | |
| Y | <u>GB - A - 1 290 855</u> (WEIR PUMPS) | |
| | * Figur 1; Seite 2, Zeilen 6 bis 20 * | 4-6 |
| | -- | |
| A | <u>FR - A - 2 268 981</u> (RATIER-FOREST) | |
| | * Figuren 1 und 2 * | 4-6 |
| | -- | |
| A | <u>DE - A - 2 608 501</u> (MORA) | |
| | * Figuren; Seiten 6 und 7 * | 1 |
| | -- | |
| Y/D | <u>DE - A - 2 320 944</u> (BURGHARDT) | |
| | * Seite 4, Zeilen 21 bis 32 * | 1-3 |
| | ------ | |

**KLASSIFIKATION DER ANMELDUNG (Int Cl ³)**

G 01 B 5/00
5/06

**RECHERCHIERTE SACHGEBIETE (Int. Cl. )**

G 01 B
B 23 Q
B 25 H

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12.03.1982 | IVES |

EPA form 1503.1  06.78